(19) **Europäisches Patentamt**

**European Patent Office**

**Office européen des brevets**

(11) **EP 1 244 224 A2**

(12) **EUROPEAN PATENT APPLICATION**

(43) Date of publication:
**25.09.2002 Bulletin 2002/39**

(51) Int Cl.7: **H04B 1/707**, H04B 7/08

(21) Application number: **01309627.6**

(22) Date of filing: **15.11.2001**

| | |
|---|---|
| (84) Designated Contracting States:<br>**AT BE CH CY DE DK ES FI FR GB GR IE IT LI LU<br>MC NL PT SE TR**<br>Designated Extension States:<br>**AL LT LV MK RO SI**<br><br>(30) Priority: **20.03.2001 KR 2001014468**<br><br>(71) Applicant: **Hantel Co. Ltd.**<br>**Gangnam-gu, Seoul (KR)** | (72) Inventors:<br>• **Ahn, Sung Soo**<br>  **Dongan-gu, Anyang-si, Gyeonggi-do (KR)**<br>• **Choi, Seung Won**<br>  **Dobong-gu, Seoul (KR)**<br><br>(74) Representative: **Mounteney, Simon James**<br>**MARKS & CLERK,**<br>**57-60 Lincoln's Inn Fields**<br>**London WC2A 3LS (GB)** |

(54) **Method and apparatus for enhanced demodulation in a CDMA receiving system utilizing array antenna**

(57) A signal processing method and apparatus to enhance demodulation performance of receiving system utilizing the array antenna operating in various CDMA signal environments such as IS95 CDMA system, or IS2000 1x CDMA system, etc. The method improves the demodulation performance by applying a weight vector, which is computed in a signal processing means of a CDMA system adopting the array antenna, to the signal vectors of Walsh demodulation outputs. The key part of the invention is in the composite procedures of finding the index D of the Walsh demodulation outputs, which corresponds to the 6-bit data transmitted from a mobile terminal. More specifically, the invention provides a systematic way of applying the weight vector to each of the 64 Walsh demodulation outputs, such that one index out of the 64 indices corresponds to the largest magnitude. Also the invention discloses how to compute the weight vector from received signals.

FIG. 1

EP 1 244 224 A2

**Description**

Field of the Invention

The present invention relates to a signal processing technique of a CDMA receiving system equipped with an array antenna, particularly to a signal processing method and apparatus to enhance demodulation performance of receiving system utilizing the array antenna operating in various CDMA (code division multiple access) signal environments such as an IS95 CDMA system, or an IS2000 1x CDMA system, etc.

Description of the Prior Art

In conventional CDMA BS (base station) receiving systems, since a single antenna system instead of an array antenna system is adopted, the communication quality is severely restricted by the interferences and noises mainly due to the inaccurate demodulations.

Although the array antenna system has been demonstrated as being a promising candidate for enhancing the communication quality and increasing the communication capacity as well, the desired characteristics of array antenna system in CDMA signal environments can never be obtained unless the accuracy of Walsh demodulator is correspondingly improved in the array antenna system with a reasonable complexity.

Accordingly, there is a need in the art for an improved signal processing technique of the CDMA receiving system utilizing the array antenna.

In this document, a lower-case letter with a single underline will be used for a vector quantity and a double underline will be used for a matrix quantity.

Summary of the Invention

It is, therefore, an object of the invention to provide a signal processing method for enhancing demodulation performance of CDMA receiving system utilizing the array antenna, in order to overcome the problems in the conventional CDMA receiving systems as mentioned previously. The method improves the demodulation performance by applying the weight vector, which is computed in a signal processing unit of a CDMA system adopting the array antenna, to the signal vectors of an Walsh demodulation outputs.

It is another object of this invention to provide a signal processing apparatus of demodulating the signals of the CDMA receiving system that improves the demodulation performance by applying the weight vector, which is computed in a signal processing apparatus of the CDMA System adopting the array antenna, to the signal vectors of the Walsh demodulation outputs.

It is further another object of this invention to provide a storage medium that implements the signal processing method for the CDMA receiving system that improves the demodulation performance by applying the weight vector, which is computed in a signal processing part of the CDMA system adopting the array antenna, to the signal vectors of the Walsh demodulation outputs.

In accordance with an aspect of the present invention, there is provided a signal processing method for enhancing a demodulation performance of CDMA receiving system utilizing an array antenna, the method comprising the steps of: a) producing array outputs $y_k = \underline{w}^H \underline{x}_k$, by unit of products between an weight vector $\underline{w}$ at present snapshot and each of Walsh demodulation outputs $\underline{x}_k$; b) selecting an index number D of an array output $y_D$ in such a way that a magnitude of a selected array output is largest of all array outputs $y_D \geq y_k$; and c) updating the weight vector by using an Walsh demodulation output vector $\underline{x}_D$ which corresponds to the index D selected in the step b).

Also, for continuing the signal processing method at the next snapshot, the method further comprises the step of: d) returning back to the step a) with a current value of the weight vector at the present snapshot being kept as an initial value to be updated at a next snapshot for continuing the signal processing method at the next snapshot, after the step c).

In the step a) of the above-mentioned signal processing method, the Walsh demodulation outputs, $\{\underline{x}_k|k = 0, 1, 2,..., 63 \}$, are generated as results of 64 correlations of a received signal vector, with the 64 Walsh words defined in the CDMA receiving system, where N is the number of antenna elements in a given array antenna, such that each of the Walsh demodulation outputs can be written as $\underline{x}_0 = [x_{0,1}\ x_{0,2}\ ...\ x_{0,N}]^T$, $\underline{x}_1 = [x_{1,1}\ x_{1,2}\ ...\ x_{1,N}]^T$, ..., $\underline{x}_{63} = [x_{63,1}\ x_{63,2}\ ...\ x_{63,N}]^T$, where the component $x_{i,j}$ is obtained through the Walsh demodulation of the received signal with i_th Walsh word at the j_th antenna channel.

The step c) of the above-mentioned signal processing method includes the steps of: c1) converting a quantity of the index ,D, obtain from the step b) into the corresponding 6-bit binary number in order to retrieve an original data transmitted from mobile terminal; and c2) updating the weight vector, $\underline{w}_D$, utilizing the Walsh demodulation output corresponding to the index D, $\underline{x}_D$, in order to process the received signals for the next snapshot period.

Also, the step c2) of the above-mentioned signal processing method includes the steps of: c2-1) updating an autocovariance matrix of received signals with the Walsh demodulation output corresponding to the index D, $\underline{x}_D$, such that the autocovariance matrix is determined by an mathematical *relation*, $\underline{R}_{xx} = E[\underline{x}_D\ \underline{x}^H D]$ where $\underline{R}_{xx}$ is an autocovariance matrix, $E[\ ]$ denotes an expectation operator, and super script H denotes a Hermitian operator; and c2-2) computing an eigenvector corresponding to a largest eigenvalue of the autocovariance matrix obtained in the step c2-1) and use it as the weight vector.

Also, the step c2) of the above-mentioned signal processing method includes the steps of: c2-1) updating an autocovariance matrices of received signals obtained before and after the dispreading procedure through mathematical operations, $\underline{R}_{rr} = E[\underline{r}\ \underline{r}^H]$ and $\underline{R}_{xx} = E[\underline{x}_D\ \underline{x}^H_D]$, respectively, where the received signal vector obtained before the dispreading procedure $\underline{r}$ is defined as $\underline{r} = [r_1\ r_2\ ...\ r_N]^T$ with the superscript T being the transpose operator and $r_i$ being defined as the received signal at the i_th antenna element, i.e., $\{r_i = r_{I,i} + j\ r_{Q,i}$ for $i = 1, 2, ..., N\ \}$ and $r_{I,i}$ and $r_{Q,i}$, and the received signal vector $\underline{x}_D$ is itself the output of the Walsh demodulator; and c2-2) updating the weight vector with an eigenvector corresponding to a largest eigenvalue in a generalized eigenvalue equation consisting of the autocovariance matrices of received signals obtained before and after the dispreading procedure through the mathematical operations, $\underline{R}_{rr} = E[\underline{r}\ \underline{r}^H]$ and $\underline{R}_{xx} = E[\underline{x}_D\ \underline{x}^H_D]$, respectively, as mentioned in the previous step c2-1) such that the weight vector $\underline{w}_D$ is eventually computed from the generalized eigenvalue equation, $\underline{R}_{xx}\ \underline{w}_D = \lambda_{MAX}\underline{R}_{rr}\ \underline{w}_D$, where $\lambda_{MAX}$ denotes the largest eigenvalue of the given generalized eigenvalue equation.

In accordance with another aspect of the present invention, there is provided a signal processing apparatus for enhancing a demodulation performance of CDMA receiving system utilizing an array antenna, the apparatus comprising: unit for producing array outputs, by unit of products between an weight vector at present snapshot and each of Walsh demodulation outputs; unit for selecting an index number of an array output in such a way that a magnitude of a selected array output is largest of all array outputs; and unit for updating the weight vector by using an Walsh demodulation output vector which corresponds to the index selected in the unit for selecting the index number.

In the above-mentioned signal processing apparatus, the Walsh demodulation outputs, $\{\underline{x}_k|\ k = 0,1, 2,..., 63\ \}$, are generated as results of 64 correlations of a received signal vector, with the 64 Walsh words defined in the CDMA receiving system, where N is the number of antenna elements in a given array antenna, such that each of the Walsh demodulation outputs can be written as $\underline{x}_0 = [x_{0,1}\ x_{0,2}\ ...\ x_{0,N}]^T$, $\underline{x}_1 = [x_{1,1}\ x_{1,2}\ ...\ x_{1,N}]^T$, ..., $\underline{x}_{63} = [x_{63,1}\ x_{63,2}\ ...\ x_{63,N}]^T$, where the component $x_{i,j}$ is obtained through the Walsh demodulation of the received signal with i_th Walsh word at the j_th antenna channel.

The unit for updating the weight vector of the above-mentioned signal processing apparatus includes: a conversion unit for converting a quantity of the index, D, obtain from the unit for selecting the index number into the corresponding 6-bit binary number in order to retrieve an original data transmitted from mobile terminal; and a first updating unit for updating the weight vector $\underline{w}_D$, utilizing the Walsh demodulation output corresponding to the index D, $\underline{x}_D$, in order to process the received signals for the next snapshot period.

The first updating unit of the above-mentioned signal processing apparatus includes: a second updating unit for updating an autocovariance matrix of received signals with the Walsh demodulation output corresponding to the index D, $\underline{x}_D$, such that the autocovariance matrix is determined by an mathematical relation, $\underline{R}_{xx} = E[\underline{x}_D\ \underline{x}^HD]$ where $\underline{R}_{xx}$ is an autocovariance matrix, $E[\ ]$ denotes an expectation operator, and super script H denotes a Hermitian operator; and a computing unit for computing an eigenvector corresponding to a largest eigenvalue of the autocovariance matrix obtained by the second updating unit and use it as the weight vector.

Also, the first updating unit of the above-mentioned signal processing apparatus includes: a second updating unit for updating an autocovariance matrices of received signals obtained before and after the dispreading procedure through mathematical operations, $\underline{R}_{rr} = E[\underline{r}\ \underline{r}^H\ ]$ and $\underline{R}_{xx} = E[\underline{x}_D\ \underline{x}^H_D]$, respectively, where the received signal vector obtained before the dispreading procedure $\underline{r}$ is defined as $\underline{r} = [\ r_1\ r_2\ ...\ r_N\ ]^T$ with the superscript T being the transpose operator and $r_i$ being defined as the received signal at the i_th antenna element, i.e., $\{r_i = r_{I,i} + j\ r_{Q,i}$ for $i = 1, 2, ..., N\ \}$ and $r_{I,j}$ and $r_{Q,i}$, and the received signal vector $\underline{x}_D$ is itself the output of the Walsh demodulator; and a third updating unit for updating the weight vector with an eigenvector corresponding to a largest eigenvalue in a generalized eigenvalue equation consisting of the autocovariance matrices of received signals obtained before and after the dispreading procedure through the mathematical operations, $\underline{R}_{rr} = E[\underline{r}\ \underline{r}^H]$ and $\underline{R}_{xx} = E[\underline{x}_D\ \underline{x}^H_D]$, respectively, as mentioned in the second updating unit such that the weight vector $\underline{w}_D$ is eventually computed from the generalized eigenvalue equation, $\underline{R}_{xx}\ \underline{w}_D = \lambda_{MAX}\ \underline{R}_{rr}\ \underline{w}_D$, where $\lambda_{MAX}$ denotes the largest eigenvalue of the given generalized eigenvalue equation.

In accordance with further another aspect of the present invention, there is provided a computer-readable recording medium storing instructions for executing a signal processing method for enhancing a demodulation performance of CDMA receiving system utilizing an array antenna, the method comprising the steps of: a) producing array outputs, by unit of products between an weight vector at present snapshot and each of Walsh demodulation outputs; b) selecting an index number of an array output in such a way that a magnitude of a selected array output is largest of all array outputs; and c) updating the weight vector by using an Walsh demodulation output vector which corresponds to the index selected in the step b). In the computer-readable recording medium storing instructions for executing a signal processing method, the method further comprises the step of: d) returning back to the step a) with a current value of the weight vector at the present snapshot being kept as an initial value to be updated at a next snapshot for continuing the signal processing method at the next snapshot, after the step c).

Brief Description of the Drawings

Other objects and aspects of the invention will become apparent from the following description of the embodiments with reference to the accompanying drawings, in which:

Fig. 1 illustrates a block diagram that explains how to demodulate the signal received through the n_th antenna element of a receiving system at a CDMA BS (base station) adopting the array antenna comprising a plurality of antenna elements;

Fig. 2 illustrates a block diagram that explains how to demodulate the received signals at the CDMA receiving system by using the weight vector in accordance with a preferred embodiment of the invention; and

Fig. 3 illustrates a flow chart describing the signal processing method of demodulating the received signal in accordance with the preferred embodiment of the invention.

Preferred Embodiments of the Invention

The objectives, characteristics, and advantages of this invention, as mentioned earlier, can be more clarified through additional explanations together with the following figures. Hereinafter, it will be described in detail about a method, an apparatus and a storage medium for demodulating the signals of the CDMA receiving system to enhance demodulation performance of receiving system, according to a preferred embodiment of the present invention in reference to the appended drawings.

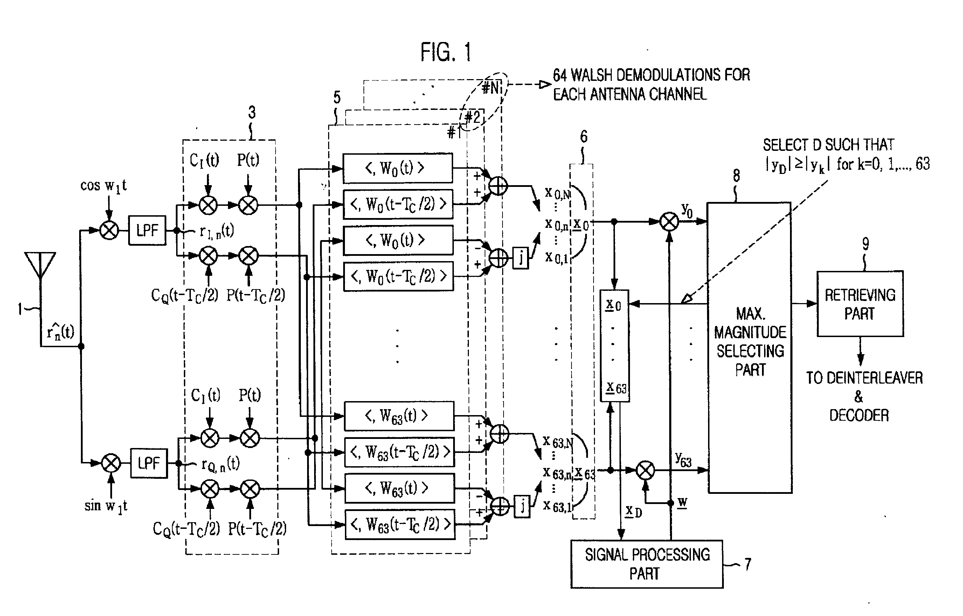

Fig. 1 illustrates a block diagram that explains how to demodulate the signal received through the n_th antenna element of a receiving system adopting the array antenna.

In Fig. 1, a reference numeral 1 denotes an array antenna, 3 denotes a PN-code dispreading part, 5 denotes an Walsh demodulating part, 7 denotes a signal processing part, 8 denotes a maximum magnitude selecting part, and 9 denotes a retrieving part, respectively.

This invention enhances the demodulation performance of CDMA receiving system adopting the array antenna, through the receiving procedures such as low-pass filtering, dispreading, Walsh demodulating, etc., as illustrated in Fig. 1.

The key part of this invention is in the composite procedures of finding the index D of the Walsh demodulation outputs, which corresponds to the 6-bit data transmitted from mobile terminal. More specifically, the preferred embodiment of the invention provides a systematic way of applying the weight vector to each of the 64 Walsh demodulation outputs such that one index out of the 64 indices corresponding to the largest magnitude. The preferred embodiment also discloses how to compute the weight vector from received signals.

In order to explain this invention, the techniques disclosed in the embodiment are summarized as follows.

First, the 64 array outputs, $y_k = \underline{w}^H \underline{x}_k$ for $k = 0, 1, 2, ..., 63$, are produced through the product between the 64 Walsh demodulation outputs $\{\underline{x}_k | k = 0, 1, 2, ..., 63\}$ and the weight vector $\underline{w}$.

Second, the 64 array outputs are fed to the maximum magnitude selecting part 8 in order to find the index D of the array output $y_D$ of which the magnitude is largest of all the 64 array outputs, i.e., $|y_D| \geq |y_k|$ for $k = 0, 1, 2, ..., 63$.

The information found in the maximum magnitude selecting part 8, i.e., the index D, is retrieved into 6-bit word in the retrieving part 9.

This invention suggests a signal processing method of applying the array antenna system to various CDMA environments such as IS95, IS2000 1x, etc. Through the technique provided in this invention, the performance of Walsh demodulation in CDMA environments is greatly improved by exploiting the merits of the array antenna system.

Furthermore, in order to improve the accuracy of the Walsh demodulator, which eventually offers more accurate retrieval of transmitted data, this invention also provides an efficient way of obtaining the weight vector that is optimum for a given the array antenna system.

It particularly unit that this invention provides a novel method of computing the weight vector in the signal processing part which is shown as 7 in Fig. 1.

The demodulation technique disclosed in this invention which makes use of the array antenna system operating in CDMA signal environment has its own originality which has never been disclosed in any other prior arts in the sense that it provides how to apply the weight vector to the Walsh demodulation outputs, how to retrieve the data transmitted from mobile terminal, and how to compute the weight vector as well.

As mentioned earlier, figures 1 to 3 illustrate the demodulation procedures of CDMA receiving system suggested in this invention.

Fig. 1 shows the data processing block diagram for the received signal at the n_th antenna elements in the array antenna system consisting of N antenna elements. The basic idea and system structure related to the contents of figure 1 has partially been disclosed in J. S. Lee, and L. E. Miller, "CDMA System Engineering Handbook", Archtech House, 1998, pp750-757. Note, however, that Lee and Miller's work has never considered the array antenna system.

The signal $r_n(t)$ received at the array antenna 1 is first frequency-down converted and low-pass filtered to produce $r_{I,n}(t)$ and $r_{Q,n}(t)$, then dispread with the PN-code in the PN-code dispreading part 3, then passed through the Walsh demodulating part 5. The received signal that passes through the Walsh demodulating part 5 is denoted as being the Walsh demodulation output.

Given that the number of antenna elements in the array antenna is N, the Walsh demodulation output is a vector of Nx1. According to the data format of CDMA system, the total number of the Walsh words is 64. Out of the 64 Walsh demodulation outputs, the one corresponding to the k_th the Walsh word can be written in following equation.

$$\underline{x}_k = [x_{k,1} \ x_{k,2} \ \cdots \ x_{k,N}]^T \qquad (1)$$

Therefore, the entire 64 (Nx1) Walsh demodulation outputs can be expressed as {$\underline{x}_0$, $\underline{x}_1$, ..., $\underline{x}_{63}$} as shown in 6 of figure 1.

Each of the 64 Walsh demodulation outputs is multiplied by the weight vector to produce 64 of the array outputs which can be expressed in the following equation.

$$y_k = \underline{w}^H \underline{x}_k \text{ for } k = 0, 1, 2, ..., 63 \qquad (2)$$

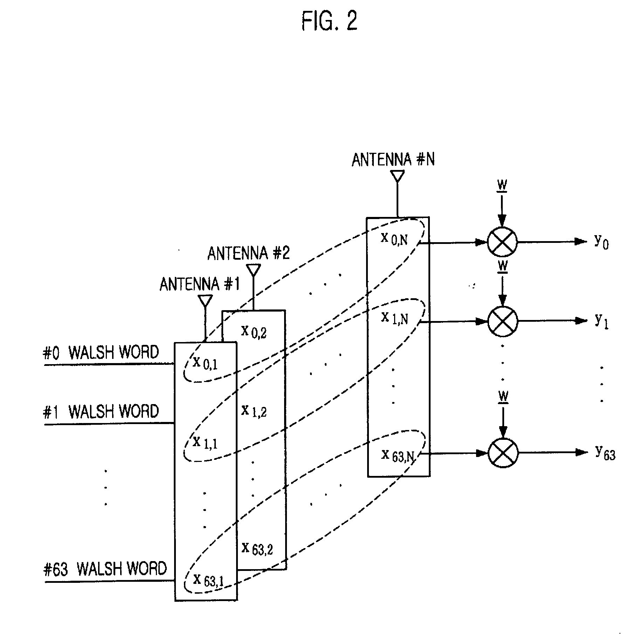

More clarified concept of the weighting between the Walsh demodulation outputs and the weight vector is given in figure 2.

Figure 2 explains more clearly the procedure of producing the 64 array outputs by weighting the 64 Walsh demodulation outputs with the weight vector. The 64 outputs, shown in the equation (2) are fed to the Maximum magnitude selecting part 8 in order to select one in such a way that the selected one has the largest magnitude of all the 64 outputs. The index, say, D, of the array output of the largest magnitude is used to retrieve the data transmitted from mobile terminal as mentioned earlier repeatedly.

The index D is then converted into the corresponding 6-bit word in the retrieving part 9 in order to retrieve the original data transmitted from the mobile terminal. Then, the 6-bit word is processed in accordance with a CDMA data format such as in de-interleaver, Viterbi decoder, etc.

The index D is also used to select the Walsh demodulation outputs in such a way that $\underline{x}_D$ is selected and fed back to the signal processing part 7 of figure 1 for the autocovariance matrices to be updated such that the weight vector is eventually produced as a result of the procedure of searching for the eigenvector corresponding to the largest eigenvalue.

The weight vector updated through the above mentioned procedure is again multiplied by the Walsh demodulation outputs to produce the 64 array outputs which are fed to the maximum magnitude selecting part 8. These series of procedures are repeated at every snapshot as long as the communication is to be continued.

As mentioned earlier and shown in figure 1, the received signal $\underline{r}$ after the frequency-down conversion but before the procedure of the PN-code dispreading can be written in the following equation (3).

$$\underline{r} = [r_{I,1} + jr_{Q,1} \ r_{I,2} + jr_{Q,2} \ \cdots\cdots \ r_{I,N} + j \ r_{Q,N}]^T \qquad (3)$$

The received signal $\underline{r}$ is a first despread with the PN-code (both short PN-code, $C_I$ and $C_Q$, and long PN-code $P(t)$) of the mobile terminal of which the signal is to be retrieved. The results of the PN-code dispreading are fed to the 64 Walsh demodulating part 5 to produce the 64 Walsh demodulation outputs, which can be written in an equation (4) as follows.

$$\{\underline{x}_k | k = 0, 1, 2, ...,63\} \qquad (4)$$

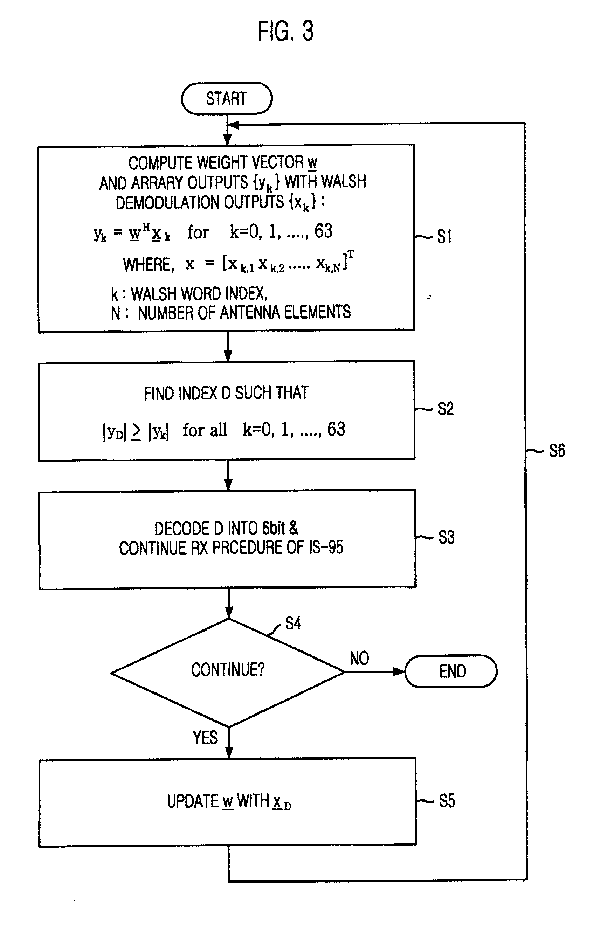

Figure 3 illustrates a flow chart of a method of signal reception according to a preferred embodiment of this invention. It shows the entire procedure of demodulating the signals received at the array antenna utilizing the weight vector.

The procedure of the demodulation scheme suggested in this invention can be summarized in step-by-step description as follows:

First, the Walsh demodulation outputs {$\underline{x}_k | k = 0, 1, 2, ..., 63$} must be produced at N antenna channels at each snapshot after the received signal at each antenna channel passes through the frequency-down conversion, PN-code dispreading, and Walsh demodulation.

Second, the array outputs { $y_k | k = 0, ...., 63$} must be produced by multiplying the weight vector to each of the Walsh demodulation outputs ($\underline{x}_k | k = 0, 1, 2,..., 63$ }.

Third, one array output should be selected in such a way that the magnitude of the selected one is largest of all the 64 outputs. Then, the index of the selected outputs, D, is determined.

Fourth, the index D determined in the above step is mapped into the corresponding 6-bit binary word to retrieve the original data transmitted from mobile terminal. Then, the 6-bit word is fed to the de-interleaving and Viterbi decoding units according to the CDMA standard, such as IS95, IS2000 1x, etc.

Fifth, the Walsh demodulation output corresponding to the selected index D is used to update the autocovariance matrix and finally update the weight vector in the signal processing part 7.

Sixth, in order to continue the reception of data, the procedure must be returned to the first step with the current value for the weight vector being kept as the initial value to be updated at the next snapshot.

It is clear that all the procedures provided in this invention can be programmed to realize the functions in each procedure as described in this invention. It is also straightforward that the software representing the functions disclosed in this invention can be stored in various memory devices such as RAM, ROM, CD-ROM, hard disk, floppy disk, magnetic tape, etc for computing systems.

This invention provides the following merits and effects in signal processing at the receiving systems operating in CDMA signal environments such as the IS95 system, the IS2000 lx system, etc.

First, the weight vector can be generated accurately because the proposed technique enables the processing gain of the Walsh demodulator as well as the short and long PN-code assigned in the IS95 CDMA system be fully exploited. Second, the performance of the Walsh demodulator in CDMA system is greatly improved because the desired signal transmitted from the desired mobile terminal is add in-phase with the aid of optimal weight vector. Third, an efficient and simple way of computing the weight vector is provided in this invention such that the computational load of the CDMA receiving system adopting the array antenna system is reduced. Combining all the merits provided in this invention, the communication quality and communication capacity are greatly improved.

Although the preferred embodiments of the invention have been disclosed for illustrative purposes, those skilled in the art will appreciate that various modifications, additions and substitutions are possible, without departing from the scope and spirit of the invention as disclosed in the accompanying claims.

**Claims**

1. A signal processing method for enhancing a demodulation performance of CDMA receiving system utilizing an array antenna, the method comprising the steps of:

   a) producing array outputs, by means of products between an weight vector at present snapshot and each of Walsh demodulation outputs;
   b) selecting an index number of an array output in such a way that a magnitude of a selected array output is largest of all array outputs; and
   c) updating the weight vector by using an Walsh demodulation output vector which corresponds to the index selected in the step b).

2. The signal processing method as recited in claim 1, further comprising the step of:

   d) returning back to the step a) with a current value of the weight vector at the present snapshot being kept as an initial value to be updated at a next snapshot for continuing the signal processing method at the next snapshot, after the step c).

3. The signal processing method as recited in claim 1, wherein the Walsh demodulation outputs, $\{\underline{x}_k| k = 0, 1, 2, ..., 63 \}$, in the step a), are generated as results of 64 correlations of a received signal vector, with the 64 Walsh words defined in the CDMA receiving system, where N is the number of antenna elements in a given array antenna, such that each of the Walsh demodulation outputs can be written as $\underline{x}_0 = [x_{0,1}\ x_{0,2} ... x_{0,N}]^T$, $\underline{x}1 = [x_{1,1}\ x_{1,2} ... x_{1,N}]^T$, ..., $\underline{x}_{63} = [x_{63,1}\ x_{63,2} ... x_{63,N}]^T$, where the component $x_{i,j}$ is obtained through the Walsh demodulation of the received signal with i_th Walsh word at the j_th antenna channel.

4. The signal processing method as recited in claim 1, wherein the step c) includes the steps of:

   c1) converting a quantity of the index, D, obtained in the step b) into the corresponding 6-bit binary number in order to retrieve an original data transmitted from mobile terminal; and
   c2) updating the weight vector, $\underline{w}_D$, utilizing the Walsh demodulation output corresponding to the index D, $\underline{x}_D$, in order to process the received signals for the next snapshot period.

5. The signal processing method as recited in claim 4, wherein the step c2) includes the steps of:

   c2-1) updating an autocovariance matrix of received signals with the Walsh demodulation output corresponding to the index D, $\underline{x}_D$, such that the autocovariance matrix is determined by an equation as:

$$\underline{\underline{R}}_{xx} = E[\underline{x}_D\ \underline{x}^H_D]$$

   where $\underline{\underline{R}}_{xx}$ is an autocovariance matrix, $E$ [] denotes an expectation operator, and super script H denotes a Hermitian operator; and
   c2-2) computing an eigenvector corresponding to a largest eigenvalue of the autocovariance matrix obtained in the step c2-1) and use it as the weight vector.

6. The signal processing method as recited in claim 4, wherein the step c2) includes the steps of:

   c2-1) updating an autocovariance matrices of received signals obtained before and after the dispreading procedure through mathematical operations as:

$$\underline{\underline{R}}_{rr} = E[\underline{r}\ \underline{r}^H] \text{ and}$$

$\underline{\underline{R}}_{xx} = E[\underline{x}_D\underline{x}^H D]$, respectively, where the received signal vector obtained before the dispreading procedure $\underline{r}$ is defined as $\underline{r} = [r_1 \ r_2 \ ... \ r_N]^T$ with the superscript T being the transpose operator and $r_i$ being defined as the received signal at the i_th antenna element, i.e., $\{ r_i = r_{I,i} + j \ r\underline{O}_i$ for $i = 1, 2, ..., N \}$ and $r_{I,i}$ and $r\underline{O}_i$, and the received signal vector $\underline{x}_D$ is itself the output of the Walsh demodulator; and

c2-2) updating the weight vector with an eigenvector corresponding to a largest eigenvalue in a generalized eigenvalue equation consisting of the autocovariance matrices of received signals obtained before and after the dispreading procedure through the mathematical operations as:

$$R = E[\underline{r}\ \underline{r}^H] \text{ and}$$

$$\underline{\underline{R}}_{xx} = E[\underline{x}_D\ \underline{x}^H D], \text{ respectively,}$$

as mentioned in the previous step c2-1) such that the weight vector $\underline{w}_D$ is eventually computed from the generalized eigenvalue equation, $\underline{\underline{R}}_{xx}\ \underline{w}_D = \lambda_{MAX}\ \underline{\underline{R}}_{rr}\ \underline{w}_D$, where $\lambda_{MAX}$ denotes the largest eigenvalue of the given generalized eigenvalue equation.

7. The signal processing method as recited in claim 1, wherein the CDMA receiving system includes an IS95 CDMA base station receiver utilizing an array antenna.

8. The signal processing method as recited in claim 1, wherein the CDMA receiving system includes an IS2000 1x CDMA base station receiver utilizing an array antenna.

9. A signal processing apparatus for enhancing a demodulation performance of CDMA receiving system utilizing an array antenna, the apparatus comprising:

means for producing array outputs, by means of products between an weight vector at present snapshot and each of Walsh demodulation outputs;
means for selecting an index number of an array output in such a way that a magnitude of a selected array output is largest of all array outputs; and
means for updating the weight vector by using an Walsh demodulation output vector which corresponds to the index selected in the means for selecting the index number.

10. The signal processing apparatus as recited in claim 9, wherein the Walsh demodulation outputs, $\{\underline{x}_k| \ k = 0,1, 2, ..., 63 \}$, are generated as results of 64 correlations of a received signal vector, with the 64 Walsh words defined in the CDMA receiving system,
where N is the number of antenna elements in a given array antenna, such that each of the Walsh demodulation outputs can be written as $\underline{x}_0 = [x_{0,1} \ x_{0,2} \ ... \ x_{0,N}]^T$, $\underline{x}1 = [x_{1,1} \ x_{1,2}$

**...** $x_{1,N}]^T,..., \underline{x}_{63} = [x_{63,1} \ x_{63,2} \ ... \ x_{63,N}]^T$, where the component $x_{i,j}$ is obtained through the Walsh demodulation of the received signal with i_th Walsh word at the j_th antenna channel.

11. The signal processing apparatus as recited in claim 9, wherein the means for updating the weight vector includes:

a conversion means for converting a quantity of the index ,D, obtain from the means for selecting the index number into the corresponding 6-bit binary number in order to retrieve an original data transmitted from mobile terminal; and
a first updating means for updating the weight vector, $\underline{w}_D$, utilizing the Walsh demodulation output corresponding to the index D, $\underline{x}_D$, in order to process the received signals for the next snapshot period.

12. The signal processing apparatus as recited in claim 12, wherein the first updating means includes:

a second updating means for updating an autocovariance matrix of received signals with the Walsh demodulation output corresponding to the index D, $\underline{x}_D$, such that the autocovariance matrix is determined by an equation as:

$$\underline{\underline{R}}_{xx} = E[\underline{x}_D\ \underline{x}^H_D]$$

where $\underline{R}_{xx}$ is an autocovariance matrix, $E$ [] denotes an expectation operator, and super script H denotes a Hermitian operator; and
a computing means for computing an eigenvector corresponding to a largest eigenvalue of the autocovariance matrix obtained by the second updating means and use it as the weight vector.

13. The signal processing apparatus as recited in claim 12, wherein the first updating means includes:

a second updating means for updating an autocovariance matrices of received signals obtained before and after the dispreading procedure through mathematical operations as:

$$\underline{\underline{R}}_{rr} = E[\underline{r}\ \underline{r}^H]\ \text{and}$$

$$\underline{\underline{R}}_{xx} = E[\underline{x}_D\ \underline{x}^H{}_D],\ \text{respectively,}$$

where the received signal vector obtained before the dispreading procedure $\underline{r}$ is defined as $\underline{r} = [r_1\ r_2 \dots r_N]^T$ with the superscript T being the transpose operator and $r_i$ being defined as the received signal at the i_th antenna element, i.e., $\{r_i = r_{I,i} + j\ r_{Q,i}$ for $i = 1, 2, \dots, N\}$ and $r_{I,i}$ and $r_{Q,i}$, and the received signal vector $\underline{x}_D$ is itself the output of the Walsh demodulator; and

a third updating means for updating the weight vector with an eigenvector corresponding to a largest eigenvalue in a generalized eigenvalue equation consisting of the autocovariance matrices of received signals obtained before and after the dispreading procedure through the mathematical operations as:

$$\underline{\underline{R}}_{rr} = E[\underline{r}\ \underline{r}^H]\ \text{and}$$

$$\underline{\underline{R}}_{xx} = E[\underline{x}_D\ \underline{x}^H{}_D],\ \text{respectively,}$$

as mentioned in the second updating means such that the weight vector $\underline{w}_D$ is eventually computed from the generalized eigenvalue equation, $\underline{\underline{R}}_{xx}\ \underline{w}_D = \lambda_{MAX}\ \underline{\underline{R}}_{rr}\ \underline{w}_D$, where $\lambda_{MAX}$ denotes the largest eigenvalue of the given generalized eigenvalue equation.

14. The signal processing apparatus as recited in claim 9, wherein the CDMA receiving system includes an IS95 CDMA base station receiver utilizing an array antenna.

15. The signal processing apparatus as recited in claim 9, wherein the CDMA receiving system includes an IS2000 lx CDMA base station receiver utilizing an array antenna.

16. A computer-readable recording medium storing instructions for executing a signal processing method for enhancing a demodulation performance of CDMA receiving system utilizing an array antenna, the method comprising the steps of:

a) producing array outputs, by means of products between an weight vector at present snapshot and each of Walsh demodulation outputs;
b) selecting an index number of an array output in such a way that a magnitude of a selected array output is largest of all array outputs; and
c) updating the weight vector by using an Walsh demodulation output vector which corresponds to the index selected in the step b).

17. The computer-readable recording medium storing instructions for executing a signal processing method as recited in claim 16, the method further comprising the step of:

d) returning back to the step a) with a current value of the weight vector at the present snapshot being kept as an initial value to be updated at a next snapshot for continuing the signal processing method at the next snapshot, after the step c).

FIG. 1

FIG. 2

ANTENNA #N

ANTENNA #2

ANTENNA #1

#0  WALSH WORD

#1  WALSH WORD

#63  WALSH WORD

$x_{0,1}$

$x_{0,2}$

$x_{0,N}$

$x_{1,1}$

$x_{1,2}$

$x_{1,N}$

$x_{63,1}$

$x_{63,2}$

$x_{63,N}$

$\underline{W}$

$\underline{W}$

$\underline{W}$

$y_0$

$y_1$

$y_{63}$

# FIG. 3

START

COMPUTE WEIGHT VECTOR $\underline{w}$
AND ARRARY OUTPUTS $\{y_k\}$ WITH WALSH
DEMODULATION OUTPUTS $\{x_k\}$:

$$y_k = \underline{w}^H \underline{x}_k \quad \text{for} \quad k = 0, 1, \ldots, 63$$

WHERE, $\mathbf{x} = [x_{k,1} \, x_{k,2} \ldots \, x_{k,N}]^T$

k : WALSH WORD INDEX,
N : NUMBER OF ANTENNA ELEMENTS

∽ S1

FIND INDEX D SUCH THAT

$$|y_D| \geq |y_k| \quad \text{for all} \quad k = 0, 1, \ldots, 63$$

∽ S2

DECODE D INTO 6bit &
CONTINUE RX PRCEDURE OF IS-95

∽ S3

∽ S4

CONTINUE?

NO → END

YES

UPDATE $\underline{w}$ WITH $\underline{x}_D$

∽ S5

∽ S6